# EUROPÄISCHE PATENTSCHRIFT

(11) **EP 2 195 694 B1**
(45) Veröffentlichungstag und Bekanntmachung des Hinweises auf die Patenterteilung: **21.03.2012**
(21) Anmeldenummer: 08802197.7
(22) Anmeldetag: 15.09.2008
(51) Int. Cl.: G02B 6/44

(54) **VORRICHTUNG ZUR ABFANGUNG VON LICHTWELLENLEITERKABELN**
DEVICE FOR HOLDING FIBER OPTIC CABLES
DISPOSITIF DE SERRAGE DE CÂBLES DE TRANSMISSION OPTIQUE

(30) Priorität: 05.10.2007 DE 202007013984 U
(43) Veröffentlichungstag der Anmeldung: 16.06.2010
(73) Patentinhaber: CCS Technology Inc., Wilmington, DE 19803 (US)
(72) Erfinder: MÜLLER, Thorsten, 58708 Menden (DE); LAPP, Oliver, 42399 Wuppertal (DE)
(74) Vertreter: Sturm, Christoph
(86) Internationale Anmeldenummer: PCT/EP2008/007655
(87) Internationale Veröffentlichungsnummer: WO 2009/046812

(56) Entgegenhaltungen:
- WO-A-97/12268
- WO-A-2005/020400
- DE-U1-202006 006 018

## Beschreibung

Die Erfindung betrifft eine Vorrichtung zur Abfangung von Lichtwellenleiterkabeln nach dem Oberbegriff des Anspruchs 1.

Beim Aufbau von Lichtwellehleiterkabeinetzen ist es erforderlich, sogenannte Verbindungsstellen bzw. Abzweigstellen für Lichtwellenleiterkabel vorzusehen, wobei an den Verbindungsstellen bzw. Abzweigstellen Spleiße zwischen in den Lichtwellenleiterkabeln geführten Lichtwellenleitern ausgebildet werden. Zum Schutz der Spleißverbindungen an den Verbindungsstellen bzw. Abzweigstellen werden die Spleißverbindungen in sogenannten Kabelmuffen abgelegt, wobei die Lichtwellenleiterkabel über einen Dichtungskörper einer Kabelmuffe in einen Innenraum der Kabelmuffe eingeführt werden. Die über einen Dichtungskörper in den Innenraum einer Kabelmuffe eingeführten Lichtwellenleiterkabel werden insbesondere innerhalb der Kabelmuffe gegenüber einer Zugbeanspruchung sowie gegebenenfalls auch Torsionsbeanspruchung und Biegebeanspruchung abgefangen, wobei hierzu spezielle Abfangvorrichtungen dienen.

So ist aus der DE 20 2006 006 018 U1 eine Vorrichtung zur Abfangung von Lichtwellenleiterkabeln im Bereich eines Dichtungskörpers einer Kabelmuffe, nämlich innerhalb eines von der Kabelmuffe begrenzten Innenraums derselben, mit einem Montageteil und mehreren am Montageteil angreifenden Schieberteilen bekannt, wobei das Montageteil am Dichtungskörper der Kabelmuffe befestigbar ist, wobei jedes Schieberteil der individuellen Abfangung eines einzigen Lichtwellenleiterkabels dient und zur Anpassung desselben an einen Kabeldurchmesser des jeweils abzufangenden Lichtwellenleiterkabels in seiner . Position relativ zum Montageteil translatorisch in radialer Richtung des Dichtungskörpers verstellbar ist.

An den Schieberteilen greifen Führungsteile derart an, dass jedes Führungsteil, welches der individuellen Abfangung eines Zentralelements des am entsprechenden Schieberteil abzufangenden Lichtwellenleiterkabels dient, zur mittigen Ausrichtung desselben an das Zentralelement des jeweils abzufangenden Lichtwellenleiterkabels in seiner Position relativ zum Schieberteil translatorisch in radialer Richtung des Dichtungskörpers verstellbar ist.

Nach der DE 20 2006 006 018 U1 weist jedes relativ zum Montageteil verlagerbare Schieberteil eine Grundplatte mit zwei in gegenüberliegende Richtungen bzw. unterschiedliche Richtungen abgewinkelten Endabschnitten auf. Über einen der Endabschnitte greift jedes Schieberteil am Montageteil der Abfangvorrichtung an, nämlich an U-förmigen Ausstellungen des Montageteils. Hierbei sind diese Endabschnitte der Schieberteile in den U-förmigen Ausstellungen des Montageteils geführt und in denselben verschiebbar gelagert, wobei über diese Verschiebung die Schieberteile an den Durchmesser eines abzufangenden Lichtwellenleiterkabels angepasst werden können.

Eine weitere derartige Vorrichtung zur Abfangung von Licht wellenleiter kabeln ist aus der WO 97/122 68 bekannt.

Nach diesem Stand der Technik ist die Relativposition der Schieberteile relativ zum Montageteil über Feststellschrauben fixierbar, wobei sich jede Feststellschraube durch eine Bohrung in einer U-förmigen Ausstellung des Montageteils und durch ein Langloch innerhalb eines in der Ausstellung geführten Endabschnitts eines Schieberteils erstreckt. Der Zugriff auf derartige Feststellschrauben ist sowohl im Fall einer Erstmontage als auch beim Austausch eines Lichtwellenleiterkabels problematisch.

Der hier vorliegenden Erfindung liegt das Problem zu Grunde eine neuartige Vorrichtung zur Abfangung von Lichtwellenleiterkabein zu schaffen.

Dieses Problem wird durch eine Vorrichtung gemäß Anspruch 1 gelöst.

Erfindungsgemäß ist mit jeder Ausstellung des Montageteils ein Sicherungselement derart verrastet, dass eine als Anschlag wirkende Nase des Sicherungselements durch eine Ausnehmung der jeweiligen Ausstellung in ein Langloch eines in der jeweiligen Ausstellung geführten Endabschnitts eines Schieberteils eingreift und so die Relativbewegung des jeweiligen Schieberteils gegenüber dem Montageteil beschränkt.

Dadurch, dass jeder Ausstellung des Montageteils ein Sicherungselement zugeordnet ist, welches mit der jeweiligen Ausstellung des Montageteils derart verrastet ist, dass eine als Anschlag wirkende Nase des jeweiligen Sicherungselements durch eine Ausnehmung der jeweiligen Ausstellung in ein Langloch eines in der jeweiligen Ausstellung geführten Endabschnitts eines Schieberteils eingreift, kann auf die nach der Praxis benötigten Feststellschrauben gänzlich verzichtet werden. Die Sicherungselemente beschränken die Relativbewegung der Schieberteile gegenüber dem Montageteil der Abfangvorrichtung und sichern die Schieberteile am Montageteil vor einem Herausbewegen aus der jeweiligen Ausstellung und damit vor einem Herausfallen aus der jeweiligen Ausstellung während der Montage. Da die Sicherungselemente werkseitig vormontiert sind, erleichtert sich für einen Monteur die Handhabung der erfindungsgemäßen Abfangvorrichtung.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, anhand der Zeichnung näher erläutert. In der Zeichnung zeigt:
- Fig. 1:: einen Ausschnitt aus einer aus dem Stand der Technik bekannten Vorrichtung zur Abfangung von Lichtwellenleiterkabeln;
- Fig. 2:: einen Ausschnitt aus einer erfindungsgemäßen Vorrichtung zur Abfangung von Lichtwellenleiterkabeln;
- Fig. 3:: ein Detail der erfindungsgemäßen Vorrichtung in einer perspektivischen Ansicht von oben; und
- Fig. 4:: das Detail der Fig. 3 in einer perspektivischen Ansicht von unten.

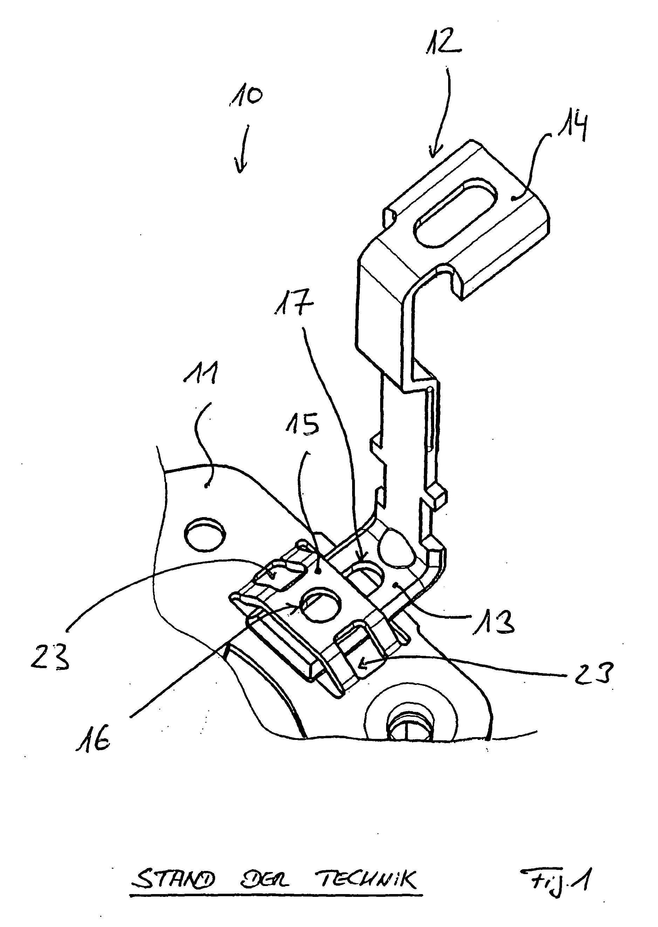

Fig. 1 zeigt einen Ausschnitt aus einer Vorrichtung 10 zur Abfangung von Lichtwellenleiterkabeln im Bereich eines Dichtungskörpers einer Kabelmuffe, nämlich innerhalb eines von der Kabelmuffe begrenzten Innenraums, wie dieselbe bereits aus der DE 20 2006 006 018 U1 bekannt ist.

So weist die Abfangvorrichtung 10 der Fig. 1 ein Montageteil 11 auf, wobei das Montageteil 11 an einem nicht-dargestellten Dichtungskörper einer Kabelmuffe befestigt werden kann. Neben dem Montageteil 11 verfügt die Abfangvorrichtung 10 über mehrere am Montageteil 11 angreifende Schieberteile 12, wobei jedes Schieberteil 12 der individuellen Abfangung eines einzigen Lichtwellenleiterkabels dient. Jedes Schieberteil 12 ist zur Anpassung desselben an ein Kabeldurchmesser des jeweils abzufangenden Lichtwellenleiterkabels translatorisch relativ zum Montageteil verstellbar, nämlich in radialer Richtung des Montageteils 11 bzw. eines Dichtungskörpers einer Kabelmuffe, an welchem das Montageteil 11 befestigt ist.

Jedes Schieberteil 12 verfügt gemäß Fig. 1 über eine Grundplatte, die an zwei sich gegenüberliegenden Enden in unterschiedliche Richtungen abgewickelte Endabschnitte 13, 14 aufweist. Über den Endabschnitt 13 greift das in Fig. 1 dargestellte Schieberteil 12 am Montageteil 11 an, nämlich an einer U-förmigen Ausstellung 15 des Montageteils 11. Der Endabschnitt 13 des Schieberteils 12 ist in der U-förmigen Ausstellung 15 des Montageteils 11 geführt und in derselben verschiebbar gelagert, wobei durch diese Verschiebung das Schieberteil 12 an den Kabeldurchmesser des an demselben abzufangenden Lichtwellenleiterkabels angepasst werden kann.

Gemäß Fig. 1 ist in die U-förmige Ausstellung 15 des Montageteils 11 eine Ausnehmung 16 und in den Endabschnitt 13 des Schieberteils 12 ein Langloch 17 eingebracht.

Nach dem Stand der Technik wird das Schieberteil 12 am Montageteil 11 dadurch gehalten, dass sich durch die Ausnehmung 16 der Ausstellung 15 sowie durch das Langloch 17 des Endabschnitts 13 eine Feststellschraube erstreckt, die im gelösten Zustand eine Relativbewegung zwischen dem Schieberteil 12 und dem Montageteil 11 innerhalb definierter Grenzen ermöglicht, und die in angezogenem Zustand das Schieberteil 12 am Montageteil 11 unverlagerbar fixiert. Die Verwendung solcher Feststellschrauben ist von Nachteil.

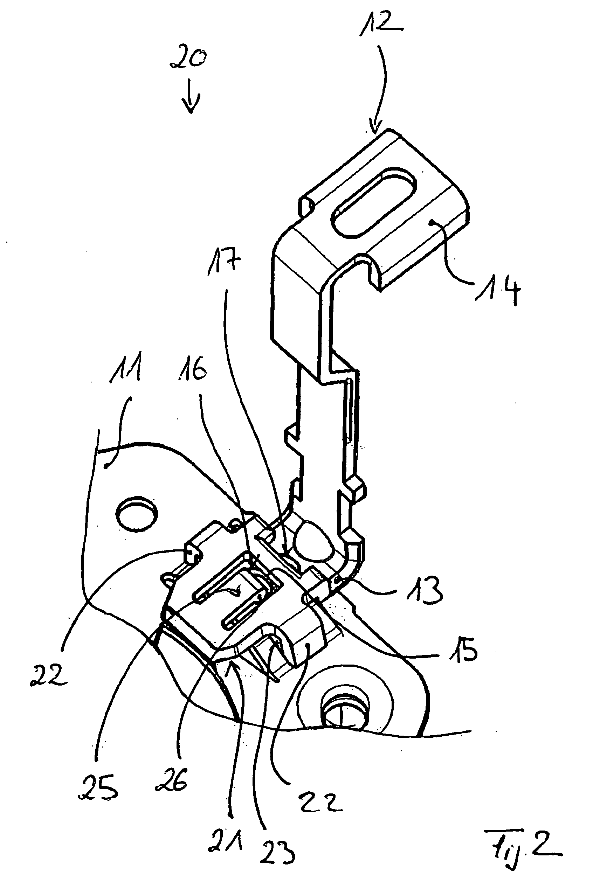

Fig. 2 zeigt einen Ausschnitt aus einer erfindungsgemäßen Vorrichtung 20 zur Abfangung von Lichtwellenleiterkabeln im Bereich eines Dichtungskörpers einer Kabelmuffe, nämlich innerhalb eines von der Kabelmuffe begrenzten Innenraums. Die erfindungsgemäße Vorrichtung 20 der Fig. 2 entspricht hinsichtlich ihres prinzipiellen Aufbaus der Vorrichtung 10 der Fig. 1, weshalb zur Vermeidung unnötiger Wiederholungen für gleiche Baugruppen gleiche Bezugsziffern verwendet werden. Nachfolgend wird nur auf solche Details eingegangen, durch die sich die erfindungsgemäße Abfangvorrichtung 20 der Fig. 2 von der aus dem Stand der Technik bekannten Abfangvorrichtung 10 der Fig. 1 unterscheidet.

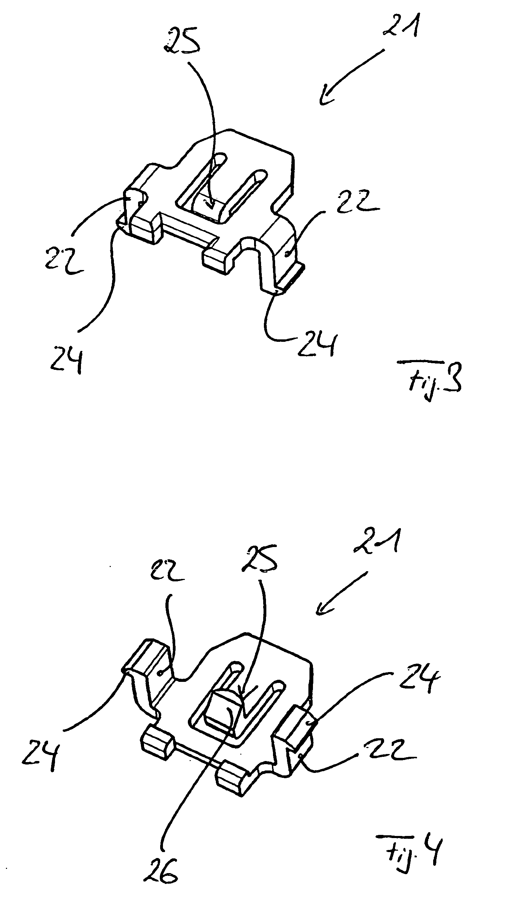

Bei der erfindungsgemäßen Abfangvorrichtung 20 ist jeder Ausstellung 15 des Montageteils 11 ein Sicherungselement 21 zugeordnet, wobei Fig. 3 und 4 dieses Sicherungselement 21 in Alleindarstellung zeigt. Das in Fig. 2 gezeigte Sicherungselement 21 ist mit der entsprechenden Ausstellung 15 des Montageteils 11 verrastet, wobei hierzu seitliche Rastnasen 22 des Sicherungselements 21 in Ausnehmungen 23 der Ausstellung 15 des Montageteils 11 eingreifen, die seitlich neben der Ausnehmung 16 positioniert sind. Die Rastnasen 22 weisen widerhakenartige Endabschnitte 24 auf, die dann, wenn die Rastnasen 22 des Sicherungselements 21 in die Ausnehmungen 23 der Ausstellung 15 eingreifen, sich an die Ausnehmungen 23 anschließende Abschnitte des Montageteils 11 hintergreifen.

In einem mittleren Abschnitt verfügt jedes Sicherungselement 21 über eine als Anschlag wirkende Nase 25, die federelastisch gegenüber dem Sicherungselement 21 verbogen werden kann.

In montiertem Zustand des in Fig. 2 gezeigten Sicherungselements 21 greift die als Anschlag wirkende Nase 25 des Sicherungselements 21 durch die Ausnehmung 16 der Ausstellung 15 des Montageteils 11 in das Langloch 17 des in der Ausstellung 15 geführten Endabschnitts 13 des Schieberteils 12 ein. Ein an der Nase 25 ausgebildeter Vorsprung 26 begrenzt dabei die Relativbewegung des Schieberteils 12 gegenüber dem Montageteil 11.

Dann, wenn ein Schieberteil 12 mit seinem Endabschnitt 13 erstmals in eine Ausstellung 15 des Montageteils 11 eingeführt werden soll, wird die Nase 25 des der jeweiligen Ausstellung 15 zugeordneten Sicherungselements 21 nach außen gebogen und schnappt dann, wenn der Vorsprung 26 in den Bereich des Langlochs 17 des Endabschnitts 13 gelangt, in das Langloch 17 ein. Bei in das Langloch 17 eingeschnappter Nase 25 kann ein Schieberteil 12 nicht mehr aus der Ausstellung 15 des Montageteils 11 herausfallen, sodass dasselbe am Montageteil 11 unverlierbar geführt ist.

Bei der erfindungsgemäßen Abfangvorrichtung 20 können demnach Schieberteile 12 am Montageteil 11 über Sicherungselemente 21 unter Beibehaltung einer radialen Bewegungsmöglichkeit der Schieberteile 12 relativ zum Montageteil 11 geführt bzw. befestigt werden. Bei Verwendung einer solchen Abfangvorrichtung 20 an einen Dichtungskörper einer Kabelmuffe erfolgt bei Verschließen einer sogenannten Kabeleinführungsöffnung des Dichtungskörpers mit Hilfe eines Dichtungskörpersegments eine automatische Zentrierung der Abfangvorrichtung in Bezug auf unterschiedliche Durchmesser abzufangender Lichtwellenleiterkabel.

### Bezugszeichenliste

- 10: Vorrichtung
- 11: Montageteil
- 12: Schieberteil
- 13: Endabschnitt
- 14: Endabschnitt
- 15: Ausstellung
- 16: Ausnehmung
- 17: Langloch

- 20: Vorrichtung
- 21: Sicherungselement
- 22: Rastnase
- 23: Ausnehmungen
- 24: Endabschnitt
- 25: Nase
- 26: Vorsprung

## Patentansprüche

1. Vorrichtung zur Abfangung von Lichtwellenleiterkabeln im Bereich eines Dichtungskörpers einer Kabelmuffe, nämlich innerhalb eines von der Kabelmuffe begrenzten Innenraums derselben, mit einem Montageteil (11), wobei das Montageteil (11) am Dichtungskörper der Kabelmuffe befestigbar ist, mit mehreren am Montageteil angreifenden Schieberteilen (12), wobei jedes Schieberteil mit einem abgewinkelten Endabschnitt (13) in jeweils eine Ausstellung (15) des Montageteils eingreift, und wobei jedes Schieberteil (12) der individuellen Abfangung eines Lichtwellenleiterkabels dient und zur Anpassung desselben an einen Kabeldurchmesser des jeweils abzufangenden Lichtwellenleiterkabels in seiner Position relativ zum Montageteil (11) translatorisch verstellbar ist, **dadurch gekennzeichnet, dass** mit jeder Ausstellung (15) des Montageteils (11) ein Sicherungselement (21) über seitliche Rastnasen (22) derart verrastet ist, dass einerseits eine als Anschlag wirkende Nase (25) des jeweiligen Sicherungselements (21) durch eine Ausnehmung (16) der jeweiligen Ausstellung (15) in ein Langloch (17) eines in der jeweiligen Ausstellung (15) geführten Endabschnitts (13) eines Schieberteils (12) eingreift und so die Relativbewegung des jeweiligen Schieberteils (12) gegenüber dem Montageteil (11) beschränkt, und dass andererseits die seitlichen Rastnasen (22) des jeweiligen Sicherungselements (21) in Ausnehmungen (23) der jeweiligen Ausstellung (15) eingreifen, die seitlich neben der Ausnehmung (16) positioniert sind, durch die sich die als Anschlag wirkende Nase (25) des jeweiligen Sicherungselements (21) erstreckt, wobei widerhakenartige Endabschnitte (24) der Rastnasen (22) Abschnitte des Montageteils (11) hintergreifen, die sich an die Ausnehmungen (23) anschließen, in welche die Rastnasen (22) eingreifen.

2. Vorrichtung nach Anspruch 1, **dadurch gekennzeichnet, dass** die Sicherungselemente (21) die in den jeweiligen Ausstellungen (15) geführten Schieberteile (12) am Montageteil (11) vor einem Herausbewegen aus der jeweiligen Ausstellung (15) sichern.

## Claims

1. Apparatus for restraining fibreoptic cables in the region of a sealing body of a cable sleeve, namely within an interior thereof which is delimited by the cable sleeve, with a fitting part (11), the fitting part (11) being capable of being fastened on the sealing body of the cable sleeve, with a plurality of slide parts (12) acting on the fitting part, each slide part engaging, with a bent-back end section (13), in each case in one protuberance (15) of the fitting part, and each slide part (12) being used for individually restraining a fibreoptic cable and being capable of being moved translationally in terms of its position relative to the fitting part (11) for the purpose of matching said slide part to a cable diameter of the respective fibreoptic cable to be restrained, **characterized in that** a securing element (21) is latched to each protuberance (15) of the fitting part (11) via lateral latching tabs (22) in such a way that, firstly, a tab (25), acting as a stop, of the respective securing element (21) engages through a cutout (16) in the respective protuberance (15) into a slot (17) in an end section (13), guided in the respective protuberance (15), of a slide part (12) and thus restricts the relative movement of the respective slide part (12) with respect to the fitting part (11), and **in that**, secondly, the lateral latching tabs (22) of the respective securing element (21) engage in cutouts (23) in the respective protuberance (15) which are positioned laterally next to the cutout (16) through which the tab (25), acting as a stop, of the respective securing element (21) extends, with barb-like end sections (24) of the latching tabs (22) engaging behind sections of the fitting part (11) which adjoin the cutouts (23) in which the latching tabs (22) engage.

2. Apparatus according to Claim 1, **characterized in that** the securing elements (21) secure the slide parts (12), guided in the respective protuberances (15), on the fitting part (11) prior to a movement out of the respective protuberance (15).

## Revendications

1. Dispositif de serrage de câbles de guides d'ondes optiques dans la région d'un corps d'étanchéité d'un manchon de câble, à savoir à l'intérieur d'un espace intérieur de celui-ci limité par le manchon de câble, comprenant une partie de montage (11), la partie de montage (11) pouvant être fixée sur le corps d'étanchéité du manchon de câble, plusieurs parties de coulisseau (12) venant en prise avec la partie de montage, chaque partie de coulisseau venant en prise avec une portion d'extrémité coudée (13) dans une partie saillante (15) de la partie de montage, et chaque partie de coulisseau (12) servant au serrage individuel d'un câble de guide d'onde optique et pouvant être déplacée en translation dans sa position par rapport à la partie de montage (11) pour l'adaptation de la partie de coulisseau à un diamètre de câble du câble de guide d'onde optique respectif à serrer, **caractérisé en ce que** qu'un élément de fixation (21) est encliqueté avec chaque partie saillante (15) de la partie de montage (11) par le biais d'ergots d'encliquetage respectifs (22) de telle sorte que d'une part, un ergot (25) de l'élément de fixation respectif (21) servant de butée vienne en prise à travers un évidement (16) de la partie saillante respective (15) dans un trou oblong (17) d'une portion d'extrémité (13) d'une partie de coulisseau (12) guidée dans la partie saillante respective (15), et limite de ce fait le mouvement relatif de la partie de coulisseau respective (12) par rapport à la partie de montage (11), et que d'autre part les ergots d'encliquetage latéraux (22) de l'élément de fixation respectif (21) viennent en prise dans des évidements (23) de la partie saillante respective (15) qui sont positionnés latéralement à côté de l'évidement (16) à travers lequel s'étend l'ergot (25) de l'élément de fixation respectif (21) servant de butée, des portions d'extrémité de type barbe (24) des ergots d'encliquetage (22) venant en prise par l'arrière avec des portions de la partie de montage (11) qui se raccordent aux évidements (23) dans lesquels s'engagent les ergots d'encliquetage (22).

2. Dispositif selon la revendication 1, **caractérisé en ce que** les éléments de fixation (21) fixent les parties de coulisseau (12) guidées dans les parties saillantes respectives (15) sur la partie de montage (11) pour éviter qu'elles ne ressortent de la partie saillante respective (15).
